# EUROPEAN PATENT APPLICATION

(11) **EP 4 365 070 A2**
(43) Date of publication of application: **08.05.2024**
(21) Application number: 23177450.6
(22) Date of filing: 06.06.2023
(51) Int. Cl.: B62M 9/10, F16H 55/30

(54) **RIVETED MODULAR BICYCLE SPROCKET**

(30) Priority: 02.11.2022 CN 202222915577 U
(71) Applicant: Shenzhen Yimahe Technology Co., Ltd., Shenzhen, Guangdong 518109 (CN)
(72) Inventor: Zhu, Hongjian, Chentao Town, 224562 (CN); Hu, Jiewu, Ningxiang City, 410625 (CN)
(74) Representative: Vesterinen, Jussi Tapio

(57) **Abstract**

The present disclosure discloses a bicycle sprocket including a cassette body, and further including a split sprocket set arranged at a front portion of the sprocket, an integrated sprocket set arranged at a middle portion of the sprocket and a bottom sprocket plate arranged at a rear portion of the sprocket; the split sprocket set is composed of a plurality of sprocket plates with single type of teeth; the sprocket plates are respectively mounted at a front portion of the cassette body; the entire integrated sprocket set is mounted at a middle portion of the cassette body; and the integrated sprocket set is riveted to the bottom sprocket plate. The present disclosure has the advantages of not damaging the cassette body, easy assembling and disassembling, easy replacement, reducing the use cost, and the like.

## Description

### TECHNICAL FIELD

The present disclosure relates to the technical field of bicycle freewheels, in particular to a novel bicycle freewheel.

### BACKGROUND

A multistage freewheel commonly used in existing bicycles is a stamped and riveted freewheel. This kind of product easily causes significant damage to a cassette body of a wheel set. Another common kind of integrated non-segmented CNC freewheel has the disadvantages that tooth plate cannot be replaced and the later use cost is too high.

### SUMMARY

The present disclosure aims to provide a novel bicycle freewheel. An integrated multistage and split multistage combination manner is adopted to solve the problem that a multistage freewheel stamping technology damages a cassette body of a wheel set in the prior art and the problem that an indivisable CNC freewheel has high use cost.

In order to achieve the above objective, the present disclosure provides the following technical solution: A novel bicycle freewheel includes a cassette body, and further includes a split freewheel set arranged at a front portion of the freewheel, an integrated freewheel set arranged at a middle portion of the freewheel, and a bottom freewheel plate arranged at a rear portion of the freewheel; the split freewheel set is composed of a plurality of freewheel plates with single teeth; the freewheel plates are respectively mounted at a front portion of the cassette body; the entire integrated freewheel set is mounted at a middle portion of the cassette body; and the integrated freewheel set is riveted to the bottom freewheel plate.

Further, an external spline is arranged on an outer surface of the cassette body; and internal splines matched with the spline are arranged on an inner surface of each freewheel plate of the split freewheel set and an inner surface of the integrated freewheel set.

Further, the internal splines and the external spline are of wide-tooth-groove structures.

Further, the split freewheel set includes a first freewheel plate, a second freewheel plate, a third freewheel plate, a fourth freewheel plate, a fifth freewheel plate, and a sixth freewheel plate from front to back in sequence; the integrated freewheel set is arranged at a rear portion of the sixth freewheel plate; and the first freewheel plate and the second freewheel plate, the second freewheel plate and the third freewheel plate, the third freewheel plate and the fourth freewheel plate, the fourth freewheel plate and the fifth freewheel plate, and the fifth freewheel plate and the sixth freewheel plate are annularly clamped.

Further, one end of each split freewheel plate connected to the next freewheel plate is provided with a boss extending backwards.

Further, grooves matched with the bosses are respectively formed in surfaces of the second freewheel plate, the third freewheel plate, the fourth freewheel plate, the fifth freewheel plate, and the sixth freewheel plate.

Further, the integrated freewheel set includes a seventh freewheel plate, an eighth freewheel plate, a ninth freewheel plate, a tenth freewheel plate, and an eleventh freewheel plate from front to back in sequence; the seventh to eleventh freewheel plates are integrally formed; and the integrated freewheel set is fixed to the bottom freewheel plate through a rivet.

Further, fin angle imitation streamlines are arranged on upper surfaces of each freewheel plate of the split freewheel set, the integrated freewheel set, and the bottom freewheel plate.

Further, the internal splines of the first freewheel plate, the second freewheel plate, the third freewheel plate, the fourth freewheel plate, and the fifth freewheel plate include a plurality of internal spline grooves uniformly arranged in a circumferential direction; a protrusion is arranged at a middle section of one of the internal spline grooves; and one end of the internal spline groove is a flat curve.

Compared with the prior art, the present disclosure has the beneficial effects as follows:
The present disclosure adopts a multi-stage structure in which a front section has a multi-tooth hierarchical design and a rear section has an integrated design. A washer is not required to be mounted. The novel bicycle freewheel is easy to assemble and disassemble, and facilitates independent replacement, and the use cost can be reduced. Due to the wide-tooth-groove design, damage to the cassette body can be effectively reduced, and the service life is prolonged.

### BRIEF DESCRIPTION OF THE DRAWINGS

FIG. 1 is a schematic diagram of an overall structure of the present disclosure;
FIG. 2 is a schematic diagram of a partial structure of the present disclosure;
FIG. 3 is a schematic exploded diagram of the present disclosure; and
FIG. 4 is a schematic structural diagram of an internal spline of the present disclosure.

In the drawings: 1: cassette body; 2: split freewheel set; 21: first freewheel plate; 22: second freewheel plate; 23: third freewheel plate; 24: fourth freewheel plate; 25: fifth freewheel plate; 26: sixth freewheel plate; 3: integrated freewheel set; 31: seventh freewheel plate; 32: eighth freewheel plate; 33: ninth freewheel plate; 34: tenth freewheel plate; 35: eleventh freewheel plate; 4: bottom freewheel plate; 5: external spline; 6: internal spline; 61: internal spline groove; 62: protrusion; 63: flat curve; 7: boss; 8: rivet; 9: hub; and 10: groove.

### DETAILED DESCRIPTION OF THE EMBODIMENTS

The technical solutions in the embodiments of the present disclosure will be described clearly and completely below with reference to the drawings in the embodiments of the present disclosure. Obviously, the embodiments described herein are only part of the embodiments of the present disclosure, not all the embodiments. Based on the embodiments in the present disclosure, all other embodiments obtained by those of ordinary skill in the art without creative work shall fall within the protection scope of the present disclosure.

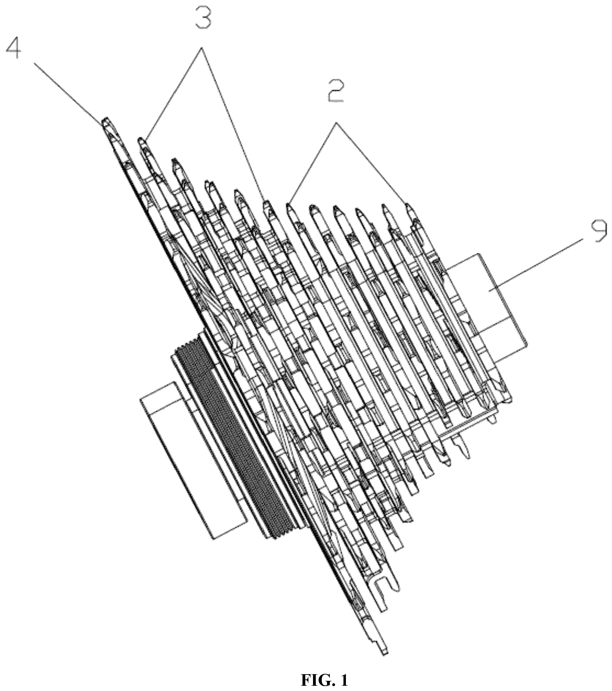

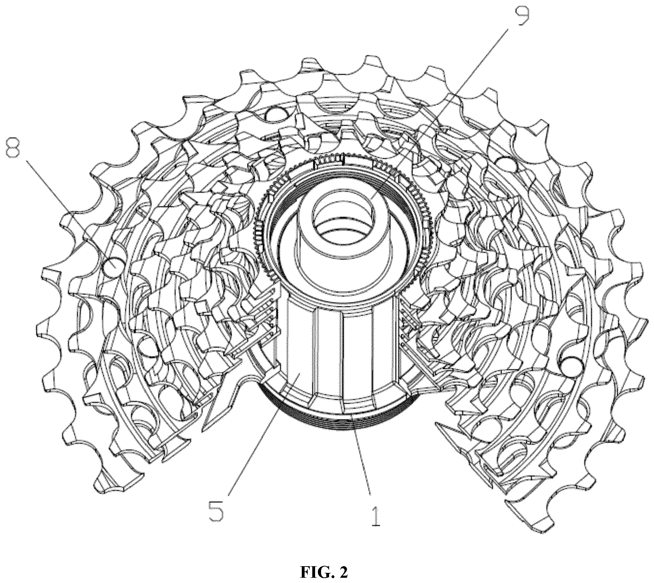

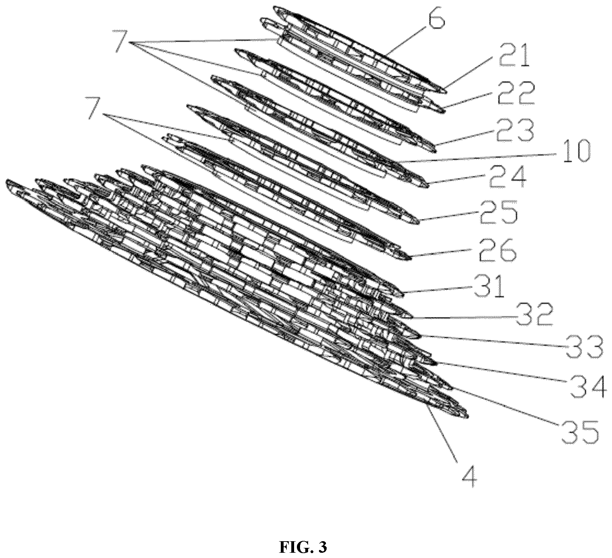

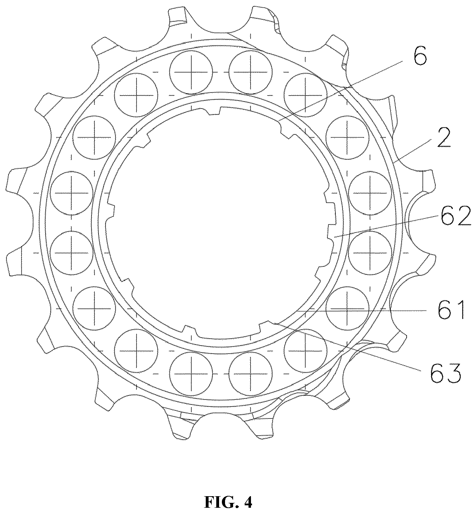

Referring to FIG. 1 to FIG. 4, the present disclosure provides a novel bicycle freewheel, including a cassette body 1. The cassette body 1 is mounted on a hub 9. An external spline 5 is arranged on an outer surface of the cassette body 1. A split freewheel set 2 is mounted at a front portion of the cassette body 1. An integrated freewheel set 3 is mounted at a middle portion of the cassette body 1. A bottom freewheel plate 4 is mounted at a rear portion of the cassette body 1. Fin angle imitation streamlines are arranged on upper surfaces of each freewheel plate of the split freewheel set 2, the integrated freewheel set 3, and the bottom freewheel plate 4. By using the fin angle imitation streamlines, stress on the freewheel plates is improved, and the speed change efficiency of the freewheel is higher. The split freewheel set 2 includes a first freewheel plate 21, a second freewheel plate 22, a third freewheel plate 23, a fourth freewheel plate 24, a fifth freewheel plate 25, and a sixth freewheel plate 26 from front to back in sequence. An internal spline 6 matched with the external spline 5 is arranged on an inner surface of each freewheel plate of the split freewheel set 2. The internal splines 6 of the first freewheel plate 21, the second freewheel plate 22, the third freewheel plate 23, the fourth freewheel plate 24, and the fifth freewheel plate 25 include a plurality of internal spline grooves 61 uniformly arranged in a circumferential direction. A protrusion 62 is arranged at a middle section of one of the internal spline grooves 61. One end of the internal spline groove 61 is a flat curve 63. One end of each split freewheel plate of the split freewheel set 2 connected to the next freewheel plate is provided with a boss 7 extending backwards. Grooves 10 matched with the bosses are respectively formed in surfaces of the second freewheel plate 22, the third freewheel plate 23, the fourth freewheel plate 24, the fifth freewheel plate 25, and the sixth freewheel plate 26. The grooves 10 may limit the bosses 7, so that each freewheel plate can be stably connected, and a reasonable clearance can be reserved between wheel teeth. The integrated freewheel set 3 is arranged at a rear portion of the sixth freewheel plate 26. The integrated freewheel set 3 includes a seventh freewheel plate 31, an eighth freewheel plate 32, a ninth freewheel plate 33, a tenth freewheel plate 34, and an eleventh freewheel plate 35 from front to back in sequence. The seventh to eleventh freewheel plates are integrally formed. Similarly, an internal spline 6 matched with the external spline 5 is arranged on an inner surface of the integrated freewheel set 3, so that the freewheel is stably connected to the cassette body 1. The integrated freewheel set 3 is fixed to the bottom freewheel plate 4 through a rivet 8. Preferably, the internal splines and the external spline of the present disclosure are of wide-tooth-groove structures, thereby enlarging a contact area between the freewheel and the cassette body and reducing damage to the cassette body. During use of the present disclosure, the bottom freewheel plate 4 at the rear portion of the freewheel is fixed to the integrated freewheel set 3 at the middle portion through the rivet 8; and the first freewheel plate 21, the second freewheel plate 22, the third freewheel plate 23, the fourth freewheel plate 24, the fifth freewheel plate 25, and the sixth freewheel plate 26 are assembled together, so that a user can directly use a tool to fix the assembled freewheel to the cassette body of the wheel set. Compared with an existing product, the novel bicycle freewheel has a larger contact area between the freewheel and the cassette body and can reduce damage to a hub and a ratchet. Due to the multi-tooth hierarchical design of the front section of the freewheel, the novel bicycle freewheel is easy to assemble and disassemble and facilitates independent replacement, and the use cost can be reduced.

It should be noted that in this context, relational terms such as first and second are used merely to distinguish one entity or operation from another entity or operation, instead of necessarily requiring or implying that these entities or operations have any of these actual relationships or orders. Furthermore, terms "include", "including" or any other variants are meant to cover non-exclusive inclusions, so that a process, method, object or device that includes a series of elements not only includes those elements, but also includes other elements which are not definitely listed, or further includes inherent elements of this process, method, object or device. Without more restrictions, elements defined by a sentence "includes a/an ..." do not exclude that the process, method, object or device that includes the elements still includes other identical elements.

Although the embodiments of the present disclosure have been shown and described, it will be understood by those of ordinary skill in the art that various changes, modifications, substitutions, and transformations can be made to these embodiments without departing from the principle and spirit of the present disclosure. The scope of the present disclosure is defined by the attached claims and their equivalents.

## Claims

1. A novel bicycle freewheel, comprising a cassette body, and further comprising a split freewheel set arranged at a front portion of the freewheel, an integrated freewheel set arranged at a middle portion of the freewheel, and a bottom freewheel plate arranged at a rear portion of the freewheel, wherein the split freewheel set is composed of a plurality of freewheel plates with single teeth; the freewheel plates are respectively mounted at a front portion of the cassette body; the entire integrated freewheel set is mounted at a middle portion of the cassette body; and the integrated freewheel set is riveted to the bottom freewheel plate.

2. The novel bicycle freewheel according to claim 1, wherein an external spline is arranged on an outer surface of the cassette body; and internal splines matched with the spline are arranged on an inner surface of each freewheel plate of the split freewheel set and an inner surface of the integrated freewheel set.

3. The novel bicycle freewheel according to claim 2, wherein the internal splines and the external spline are of wide-tooth-groove structures.

4. The novel bicycle freewheel according to claim 1, wherein the split freewheel set comprises a first freewheel plate, a second freewheel plate, a third freewheel plate, a fourth freewheel plate, a fifth freewheel plate, and a sixth freewheel plate from front to back in sequence; the integrated freewheel set is arranged at a rear portion of the sixth freewheel plate; and the first freewheel plate and the second freewheel plate, the second freewheel plate and the third freewheel plate, the third freewheel plate and the fourth freewheel plate, the fourth freewheel plate and the fifth freewheel plate, and the fifth freewheel plate and the sixth freewheel plate are annularly clamped.

5. The novel bicycle freewheel according to claim 4, wherein one end of each split freewheel plate connected to the next freewheel plate is provided with a boss extending backwards.

6. The novel bicycle freewheel according to claim 5, wherein grooves matched with the bosses are respectively formed in surfaces of the second freewheel plate, the third freewheel plate, the fourth freewheel plate, the fifth freewheel plate, and the sixth freewheel plate.

7. The novel bicycle freewheel according to claim 1, wherein the integrated freewheel set comprises a seventh freewheel plate, an eighth freewheel plate, a ninth freewheel plate, a tenth freewheel plate, and an eleventh freewheel plate from front to back in sequence; the seventh to eleventh freewheel plates are integrally formed; and the integrated freewheel set is fixed to the bottom freewheel plate through a rivet.

8. The novel bicycle freewheel according to claim 1, wherein fin angle imitation streamlines are arranged on upper surfaces of each freewheel plate of the split freewheel set, the integrated freewheel set, and the bottom freewheel plate.

9. The novel bicycle freewheel according to claim 4, wherein the internal splines of the first freewheel plate, the second freewheel plate, the third freewheel plate, the fourth freewheel plate, and the fifth freewheel plate comprise a plurality of internal spline grooves uniformly arranged in a circumferential direction; a protrusion is arranged at a middle section of one of the internal spline grooves; and one end of the internal spline groove is a flat curve.
